(19) Europäisches Patentamt / European Patent Office / Office européen des brevets

(11) **EP 4 560 152 A1**

(12) **EUROPEAN PATENT APPLICATION**

(43) Date of publication:
**28.05.2025 Bulletin 2025/22**

(21) Application number: **23211232.6**

(22) Date of filing: **21.11.2023**

(51) International Patent Classification (IPC):
***F16B 13/06*** *(2006.01)*

(52) Cooperative Patent Classification (CPC):
**F16B 13/065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventor: **Shimahara, Hideki**
**9472 Grabs (CH)**

(74) Representative: **Hilti Aktiengesellschaft**
**Corporate Intellectual Property**
**Feldkircherstrasse 100**
**Postfach 333**
**9494 Schaan (LI)**

(54) **EXPANSION ANCHOR WITH ANGLED ABUTMENT WALL TRANSITION EDGE**

(57) Expansion anchor comprising an anchor bolt having a longitudinal axis, an expansion sleeve surrounding the anchor bolt, and an expansion body located in a front region of the anchor bolt, which has a converging zone for expanding the expansion sleeve. The expansion body is provided with an abutment wall recess. The abutment wall recess is delimited by a sleeve abutment wall that, axially, faces the expansion sleeve so as to provide an abutment for the expansion sleeve when the expansion sleeve is moved axially towards the sleeve abutment wall. The abutment wall recess is further delimited by a recess floor. A transition edge is formed between the recess floor and the sleeve abutment wall. The transition edge extends at a lead angle $\alpha$. At least in a section of the transition edge, the following holds for the lead angle $\alpha$: $4° \leq \alpha \leq 30°$.

Fig. 4

EP 4 560 152 A1

**Description**

The invention relates to an expansion anchor according to the preamble of claim 1.

US2021231150 A1 and US2020224695 A1 describe expansion anchors provided with sleeve abutment walls on their expansion bodies. The sleeve abutment walls are formed at abutment wall recesses which are provided within the respective expansion bodies. The sleeve abutment walls are intended to be hit by the respective expansion sleeves when the anchors are expanded.

EP4074991 A1 and EP4074990 A1 show expansion anchors with related geometries.

It is an object of the present invention to provide an expansion anchor that has particularly satisfactory performance, whilst having particularly low manufacturing effort.

This objective is achieved by an expansion anchor according to claim 1. The dependent claims describe preferred embodiments.

It is thus provided an expansion anchor comprising

- an anchor bolt having a longitudinal axis,
- an expansion sleeve surrounding the anchor bolt, and
- an expansion body located in a front region of the anchor bolt, wherein the expansion body has a converging zone for expanding the expansion sleeve, wherein the expansion body is provided with an abutment wall recess, wherein the abutment wall recess is delimited by a sleeve abutment wall that, axially, faces the expansion sleeve so as to provide an abutment for the expansion sleeve when the expansion sleeve is moved axially towards the sleeve abutment wall, and wherein the abutment wall recess is further delimited, in particular radially delimited, by a recess floor, wherein a transition edge is formed between the recess floor and the sleeve abutment wall.

The expansion anchor is characterized in that

- the transition edge extends at a lead angle $\alpha$, wherein at least in a section of the transition edge, the following holds for the lead angle $\alpha$:

$$4° \leq \alpha \leq 30°.$$

The invention is based on providing the expansion body with a sleeve abutment wall, which sleeve abutment wall faces the expansion sleeve before installation of the anchor, so that the expansion sleeve can hit the sleeve abutment wall when the expansion body moves along the expansion sleeve during expansion of the expansion sleeve, when the anchor is installed. As previously described (e.g. in US2020224695 A1), this can advantageously modulate the anchoring process. The invention now proposes to arrange the transition edge that is formed between the recess floor and the sleeve abutment wall, and which forms the root of the sleeve abutment wall, in a non-perpendicular relationship with respect to the longitudinal axis of the anchor bolt. More particularly, the transition edge extends at lead angle $\alpha$ that is greater than or equal to 4° and smaller than or equal to 30°, at least in a section of the transition edge, preferably throughout the transition edge.

Due to this angled arrangement of the transition edge, a progressive axial abutment and/or gradual increase of internal resistance, which may in term be beneficial for anchoring performance, can be achieved with particularly low manufacturing effort. On the other hand, the angle has an upper limit, which provides significant abutment area without the need for overly large dimensions, further reducing the effort.

It is particularly preferred that, at least in a section of the transition edge, the following holds for the lead angle $\alpha$:

$$4° \leq \alpha \leq 16°.$$

More preferably, at least in a section of the transition edge, the following holds for the lead angle $\alpha$:
$9° \leq \alpha \leq 11°$. These are particularly suitable lead angles in view of performance and effort.

It is particularly advantageous that throughout the transition edge, the following holds for the lead angle $\alpha$:

$$4° \leq \alpha \leq 30°,$$

or

$$4° \leq \alpha \leq 16°,$$

or
$9° \leq \alpha \leq 11°$. Accordingly, the entirety of the transition edge is within the described range. Alternatively or additionally, the lead angle $\alpha$, at which the transition edge extends, can be generally constant throughout the transition edge. All of this can provide for particularly homogenous operation.

The anchor bolt is an elongate body. The expansion body and the anchor bolt are, in particular, connected to transfer tensile forces in the axial direction. The expansion body can for example be threaded to the anchor bolt, in particular if the expansion anchor is a so-called sleeve-type expansion anchor. The expansion body can also be tightly fixed to the anchor bolt, in particular if the expansion anchor is a so-called stud-type expansion anchor. It is particularly preferred in case of a stud-type expansion anchor that the expansion body and the anchor bolt are monolithic, i.e. that they form one piece. If the expansion anchor is a so-called stud-type expansion anchor, the anchor bolt is preferably provided with a forwardly facing shoulder for expansion sleeve abutment and for advancing the expansion sleeve into the borehole. The expansion body is a part of the expansion anchor.

The expansion sleeve surrounds the anchor bolt, in particular around the longitudinal axis. Preferably, the expansion sleeve is a single piece. However, it could also consist of several individual segments, which are for example held in an anchor bolt-surrounding arrangement by means of a rubber band or by snap-on mechanisms.

Preferably, the anchor bolt, the expansion sleeve and/or the expansion body are each steel parts. They can for example comprise carbon steel or stainless steel.

The front region of the anchor bolt, in which the expansion body is located, is that region that is intended to lead when the expansion anchor is inserted into a borehole. The longitudinal axis of the anchor bolt extends through the front region and through the rear region of the anchor bolt.

The anchor bolt can have, in a rear region of the anchor bolt, a tension-introducing structure. The tension-introducing structure is for introducing tensile force into the anchor bolt. The tension-introducing structure can for example be a thread, in particular an outer thread, provided on the anchor bolt. However, in other embodiments, the tension-introducing structure could for example also be a head, which forms a maximum cross-section, or a bayonet-type lock.

The converging zone of the expansion body serves to expand the expansion sleeve when the expansion sleeve is moved forward with respect to the expansion body, in particular to expand the expansion sleeve radially with respect to the longitudinal axis. In the converging zone, the expansion body converges on its lateral surface, towards the rear of the anchor bolt and/or towards the tension-introducing structure, wherein the focus of convergence can preferably be the longitudinal axis. This in particular implies that the radial distance of the lateral surface of the expansion body from the longitudinal axis becomes smaller towards the rear of the expansion body. The expansion body can have additional zones, for example a preferably cylindrical transition zone and/or a tip zone. The converging zone can for example be conical, or can have a more complex, for example a convex or concave shape. In particular, the converging zone forms a wedge for the expansion sleeve.

The sleeve abutment wall is so arranged that the expansion sleeve can hit the sleeve abutment wall, i.e. that the expansion sleeve can abut on the sleeve abutment wall, when the expansion sleeve is axially displaced relative to the expansion body in the forwards direction, i.e. towards the front end of the expansion body and/or the anchor bolt, in particular by drawing-in the expansion body into the expansion sleeve in the rearwards direction. Thus, the sleeve abutment wall axially faces the expansion sleeve, or, in other words, the sleeve abutment wall faces the expansion sleeve in a direction parallel to the longitudinal axis. Preferably, the sleeve abutment wall axially faces the tip of the expansion sleeve and/or serves for abutment of the tip of the expansion sleeve, and can therefore be named expansion sleeve tip abutment wall. The tip of the expansion sleeve can be understood to be the front end of the expansion sleeve, i.e. the end pointing in the forwards direction. The sleeve abutment wall is arranged vis-à-vis, in particularly axially vis-à-vis, the expansion sleeve, and particularly the tip of the expansion sleeve. In particularly, the sleeve abutment wall axially faces the expansion sleeve, in particular the expansion sleeve tip, in a state before the expansion sleeve is expanded by the expansion body, i.e. in the pre-installation state of the anchor, before the anchor is installed. In particular, the sleeve abutment wall faces towards the rear of the anchor. The anchor is so configured that the expansion sleeve, in particular with its tip, can hit the sleeve abutment wall during axial displacement of the expansion body relative to the expansion sleeve in the rearwards direction and/or during radial expansion of the expansion sleeve by the expansion body. Thus, the sleeve abutment wall is suitable and/or configured for being abutted on by the expansion sleeve, in particular axially and/or by the tip of the expansion sleeve. In particular, the sleeve abutment wall is suitable and/or configured for being abutted on, in particular axially abutted on, by a section, in particular a front-end section, of the expansion sleeve, which section is curved around the longitudinal axis and/or arranged generally perpendicular to the longitudinal axis.

In particular, the sleeve abutment wall projects radially on the expansion body and/or a step structure is formed at the sleeve abutment wall, wherein the sleeve abutment wall forms the riser of the respective step structure. The sleeve abutment wall is arranged on the lateral surface of the expansion body, i.e. on the side of the expansion body.

The expansion body is provided, in particular on its lateral surface, with an abutment wall recess, wherein the abutment wall recess is axially delimited, in particular at its front end, by the sleeve abutment wall. Thus, the sleeve abutment wall forms the front-end wall of the abutment wall recess. In particular, the abutment wall recess extends radially into the expansion body. The abutment wall recess is preferably at least partly located in the converging zone of the expansion body.

The recess floor forms a further wall of the abutment wall recess and/or radially delimits the abutment wall recess.

The recess floor and the sleeve abutment wall meet geometrically, and the transition edge is formed where the recess floor and the sleeve abutment wall meet. Thus both the recess floor and the sleeve abutment wall adjoin the transition edge. The transition edge is located within the abutment wall recess.

The lead angle is the lead angle with respect to the longitudinal axis. In accordance with usual definition, the lead angle can be considered to be the angle between a tangent on the transition edge and a plane that is orientated perpendicular to the longitudinal axis.

Where the term "longitudinal axis" is used, this should, in particular, refer to the longitudinal axis of the anchor bolt, which may usually coincide with the longitudinal axis of the expansion anchor. In accordance with the usual definition, the "longitudinal axis" can in particular be the axis that runs in the longitudinal direction, i.e. in the long direction of the elongate anchor bolt. Where the terms "radially", "axially" or "circumferentially" are used, this should in particular be understood with respect to the longitudinal axis of the anchor bolt.

According to a preferred embodiment of the invention, the radial height of the sleeve abutment wall, preferably gradually, decreases towards the rear of the anchor bolt and/or towards the rear of the expansion body. Thus, the sleeve abutment wall rises higher as it, axially, approaches the front end of the expansion body. This can allow the expansion sleeve to gradually climb up the angled sleeve abutment wall as the expansion body is drawn into the expansion sleeve, further improving performance.

It is particularly advantageous that the least one sleeve abutment wall tapers towards the rear of the anchor bolt. Thus, preferably, the sleeve abutment wall is, at least in total, non-perpendicular to the longitudinal axis. Rather, the radius of the expansion body gradual decreases towards the rear of the anchor bolt at the sleeve abutment wall. This allows creating a surmountable obstruction in a particularly reliable and easy-to-manufacture way.

The expansion body can have, located in front of the converging zone, a transition zone. In such a transition zone, the convergence of the expansion body is at least less steep as compared with the converging zone, or the convergence can be completely absent. Such a transition zone can prevent over-expanding the expansion sleeve and over-stressing the surrounding substrate at high loads. If convergence is completely absent, the transition zone can have a cylindrical lateral surface, wherein cylindrical is to be understood in a broad definition, in which the cylinder base can be, but does not necessarily have to be circular.

The sleeve abutment wall and/or the transition edge is preferably located within the converging zone, at least partly, preferably completely. If a transition zone is present, the sleeve abutment wall and/or the transition edge can also reach into this transition zone.

It is particularly preferred that the expansion body has at least one additional abutment wall recess, preferably two or three of them. The at least one additional abutment wall recess has preferably generally the same shape and/or function as the abutment wall recess. The abutment wall recess and the at least one additional abutment wall recess are preferably arranged abreast, i.e. at same axial orientation.

In addition, the expansion body might be provided with additional walls, e.g. recess side walls, which additional walls do not axially face the expansion sleeve and/or which additional walls are not suitable for expansion sleeve abutment upon axial displacement of the expansion sleeve, and which therefore cannot be termed sleeve abutment walls.

The invention is explained in greater detail below with reference to preferred exemplary embodiments, which are depicted schematically in the accompanying drawing, wherein individual features of the exemplary embodiments presented below can be implemented either individually or in any combination.

Figure 1     is a side view of an expansion anchor,

Figure 2     is the same view as in figure 1, but with the expansion sleeve omitted.

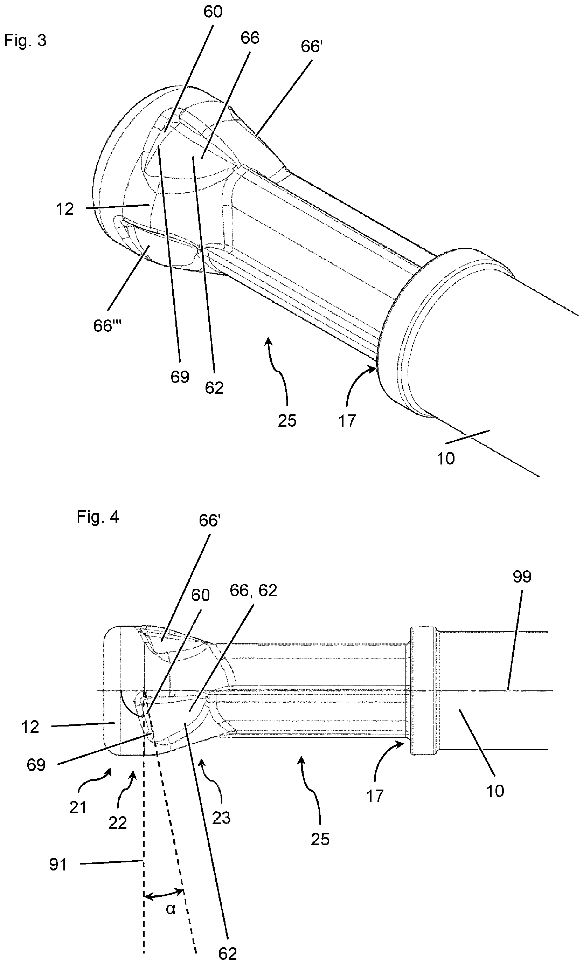

Figure 3     is a perspective enlarged view of the anchor bolt, in a front region of the anchor bolt, including the expansion body 20.

Figure 4     is a side view of the anchor bolt, in a front region of the anchor bolt, including the expansion body 20.

Figure 5     is the same view as in figure 4, but with all reference numerals and all aid lines omitted.

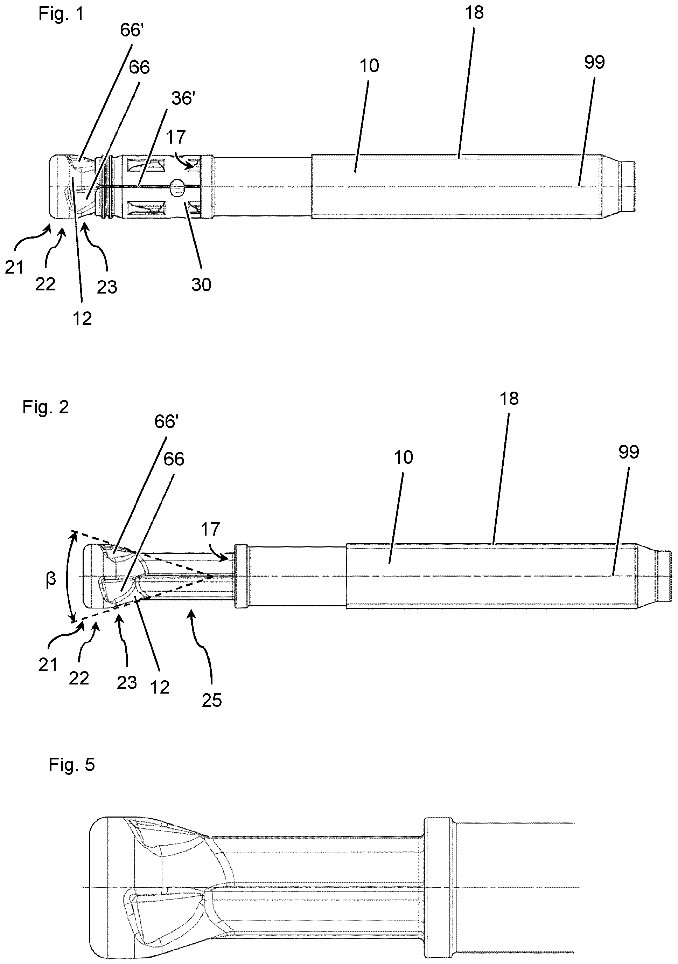

The figures show an embodiment of an expansion anchor. The anchor comprises an elongate anchor bolt 10 having a front end (left end in figure 2) and a rear end (right end in figure 2), an expansion sleeve 30, which surrounds the anchor bolt 10, and an expansion body 12 for radially expanding the expansion sleeve 30 and provided on the anchor bolt 10, namely in the vicinity of the front end of the anchor bolt 10. The anchor bolt 10 has a longitudinal axis 99, which extends through the front end and through the rear end of the anchor bolt 10. The longitudinal axis 99 passes through the expansion sleeve 30.

The expansion body 12 has a converging zone 23 designed for radially expanding the expansion sleeve 30 when the expansion body 12 is drawn into the expansion sleeve 30 in the rearward direction, i.e. when the expansion sleeve 30 moves forwards relative to the expansion body 12 onto the expansion body 12. For this purpose, the lateral surface of the expansion body 12 converges towards the rear end of the anchor bolt 10, i.e. it converges towards the expansion sleeve 30, at least before the anchor is installed. In the present example, the lateral surface of the expansion body 12 is conical in the converging zone 23, with a focus of convergence on the longitudinal axis 99 and with apex angle $\beta$ shown in figure 2. However, this is merely an example and other converging designs are also possible.

In the present example, the expansion body 12 also has a transition zone 22, which is located forwards of and adjacent to the converging zone 23, and a tip zone 21, which is located forwards of and adjacent to the transition zone 22. In the transition zone 22, the rearward convergence is smaller as compared to the converging zone 23 or the rearward convergence is even zero, but preferably not reverse, i.e. it is not a forward convergence. In the present example, convergence is absent, i.e. zero, in the converging zone 23 and the expansion body 12 has a cylindrical lateral surface in the converging zone 23, in particular cylindrical with a circular base. In the tip zone 21, the lateral surface of the expansion body 12 converges towards the front end of the anchor.

The anchor bolt 10 has a neck 25, which is located adjacent to and rearwards of the expansion body 12. The expansion sleeve 30 at least partly surrounds this neck 25, at least before installation the anchor. At the neck 25, the diameter of the anchor bolt 10 can be minimal. In the present embodiment, the anchor bolt 10 is provided, within its the neck 25, with a plurality of axially extending grooves, and the expansion sleeve 30 is provided with corresponding axially extending ridges that engage the axially extending grooves, but this is an example only.

In the present embodiment, the anchor is of the stud type. The anchor bolt 10 has, namely at the rearward end of the neck 25, a shoulder 17 facing forwards for axially engaging the expansion sleeve 30 and for advancing the expansion sleeve 30 forwards. In the present case, the expansion body 12 and the anchor bolt 10 are, by way of example, monolithic, but this is an example only, and non-monolithic designs are also feasible.

In a rear region of the anchor bolt 10, the anchor bolt 10 is provided with a tension-introducing structure 18, here in the form of an outer thread provided on the anchor bolt 10.

The expansion sleeve 30 is provided with a plurality of slits 36' (four in the present case, by way of example, of which only a single one is visible in figure 1), which originate from the front end of the expansion sleeve 30 and extend towards the rear end of the expansion sleeve 30.

On the lateral surface of the expansion body 12 is provided an abutment wall recess 66, which provides a depression within the expansion body 12 and which is radially accessible from the outside of the expansion body 12. The abutment wall recess extends 66 at least within the converging zone 23 of the expansion body 12. In the present embodiment, the abutment wall recess 66 extends only within the expansion body 12, but in other embodiments, it might also extend into the neck 25.

The abutment wall recess 66 is, radially, delimited by a recess floor 62. At its front end, the abutment wall recess 66 is, axially, delimited by a sleeve abutment wall 60. The sleeve abutment wall 60 axially faces the expansion sleeve 30, i.e. it faces rearwardly. The sleeve abutment wall 60 could be arranged perpendicularly to the longitudinal axis 99, but in the shown embodiment, the sleeve abutment wall 60 and the longitudinal axis 99 converge towards the rear end of the anchor bolt 10.

The sleeve abutment wall 60 forms a, preferably surmountable, abutment for the front end, i.e. for the tip of the expansion sleeve 30. The expansion sleeve 30 is intended to abut against the sleeve abutment wall 60 when the expansion body 12 is drawn into the expansion sleeve 30 causing the expansion sleeve 30 to be displaced forwardly relative to the expansion body 12.

Where the recess floor 62 meets the sleeve abutment wall 60, a transition edge 69 is formed. In other words, the transition edge 69 adjoins both the recess floor 62 and the sleeve abutment wall 60.

The transition edge 69 is arranged at a lead angle $\alpha$, particular with respect to a plane 91 that is arranged perpendicular to the longitudinal axis 99. This lead angle $\alpha$ is generally constant all along the transition edge 69. In the present embodiment, it is approximately 10°.

The radial (with respect to the longitudinal axis 99) height of the sleeve abutment wall 60 is non constant. Rather, this height decreases towards the rear of the anchor bolt 10.

The expansion body 12 is provided with at least one additional abutment wall recess (three additional abutment wall recesses in the present embodiment, by way of example, of which only a two, denoted with 66' and 66''', respectively, are visible in the drawings). Each of these additional abutment wall recesses 66', 66''' has a shape that is generally the same as the shape of the abutment wall recess 66. In particular, each of these additional abutment wall recesses 66', 66''' is radially delimited by an additional recess floor, and at its respective front end, each of the additional abutment wall recesses is, axially, delimited by an additional sleeve abutment wall, which faces the expansion sleeve, i.e. it faces rearwardly. Where the additional recess floor meets the additional sleeve abutment wall, an additional transition edge is formed. The at least one additional sleeve abutment wall and the sleeve abutment wall 60 are located abreast, located at the same position along the longitudinal axis 99, and do not overlap in the circumferential direction.

The anchor can be installed as follows:
In a first step the anchor is introduced, front end first, into a hole in a substrate.

Subsequently, the expansion body 12 is drawn into the front-end region of the expansion sleeve 30, which means that the expansion sleeve 30 is displaced forwards relative to the expansion body 12 and over the expansion body 12. In the present embodiment, this is achieved by pulling the anchor bolt 10 together with the expansion body 12 rearwardly, in particular by tightening a non-shown nut provided on the tension-introducing structure 18 of the anchor bolt 10. Drawing-in of the expansion body 12 into the expansion sleeve 30 causes the expansion sleeve 30 to expand radially, thereby locking the anchor in the substrate.

When the expansion body 12 is drawn sufficiently deep into the expansion sleeve 30, it will eventually hit its, with its tip, the sleeve abutment wall 60. This can result in an axial interlock of the expansion sleeve 30 with the expansion body 12 at the sleeve abutment wall 60, leading to a change of the expansion mechanism. This, in term, may result in increased pull-out resistance without excessive stress of the substrate. Due to the non-perpendicular lead angle $\alpha$ and since the radial height of the sleeve abutment wall 60 gradually increases towards the front end of the anchor bolt 10, engagement of the sleeve abutment wall 60 by the expansion sleeve 30 can expected to be a gradual process, leading to a gradual change in anchoring characteristics.

**Claims**

1. Expansion anchor comprising

    - an anchor bolt (10) having a longitudinal axis (99),
    - an expansion sleeve (30) surrounding the anchor bolt (10), and
    - an expansion body (12) located in a front region of the anchor bolt (10), wherein the expansion body (12) has a converging zone (23) for expanding the expansion sleeve (30), wherein the expansion body (12) is provided with an abutment wall recess (66), wherein the abutment wall recess (66) is delimited by a sleeve abutment wall (60) that, axially, faces the expansion sleeve (30) so as to provide an abutment for the expansion sleeve (30) when the expansion sleeve is moved axially towards the sleeve abutment wall (60), and wherein the abutment wall recess (66) is further delimited by a recess floor (62), wherein a transition edge (69) is formed between the recess floor (62) and the sleeve abutment wall (60),
    **characterized in that**
    - the transition edge (69) extends at a lead angle $\alpha$, wherein at least in a section of the transition edge (69), the following holds for the lead angle $\alpha$:

    $$4° \leq \alpha \leq 30°.$$

2. Expansion anchor according to claim 1,
    **characterized in that**

    - at least in a section of the transition edge (69), the following holds for the lead angle $\alpha$:

    $$4° \leq \alpha \leq 16°.$$

3. Expansion anchor according to any one of the preceding claims,
    **characterized in that**

    - at least in a section of the transition edge (69), the following holds for the lead angle $\alpha$:

    $$9° \leq \alpha \leq 11°.$$

4. Expansion anchor according to any one of the preceding claims,
    **characterized in that**

    - throughout the transition edge (69), the following holds for the lead angle $\alpha$:

    $$4° \leq \alpha \leq 30°,$$

    or

    $$4° \leq \alpha \leq 16°,$$

    or

    $$9° \leq \alpha \leq 11°.$$

5. Expansion anchor according to any one of the preceding claims,
    **characterized in that**
    the lead angle $\alpha$, at which the transition edge (69) extends, is generally constant throughout the transition edge (69).

6. Expansion anchor according to any one of the preceding claims,
    **characterized in that**
    the radial height of the sleeve abutment wall (60) gradually decreases towards the rear of the anchor bolt (10).

7. Expansion anchor according to any one of the preceding claims,
    **characterized in that**
    the least one sleeve abutment wall (60) tapers towards the rear of the anchor bolt (10).

Fig. 1

Fig. 2

Fig. 5

Fig. 3

Fig. 4

Europäisches
Patentamt

European
Patent Office

Office européen
des brevets

# EUROPEAN SEARCH REPORT

**Application Number**

**EP 23 21 1232**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2021/231150 A1 (SHIMAHARA HIDEKI [CH]) 29 July 2021 (2021-07-29) * the whole document * | 1-7 | INV. F16B13/06 |
| | | | **TECHNICAL FIELDS SEARCHED (IPC)** |
| | | | F16B |

The present search report has been drawn up for all claims

| Place of search | Date of completion of the search | Examiner |
|---|---|---|
| Munich | 29 April 2024 | Pirog, Pawel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ..................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 1232

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | | Publication date | Patent family member(s) | | Publication date |
|---|---|---|---|---|---|
| US 2021231150 | A1 | 29-07-2021 | CA | 3098961 A1 | 26-12-2019 |
| | | | CN | 112105824 A | 18-12-2020 |
| | | | EP | 3584453 A1 | 25-12-2019 |
| | | | EP | 3810940 A1 | 28-04-2021 |
| | | | ES | 2945794 T3 | 07-07-2023 |
| | | | JP | 7134264 B2 | 09-09-2022 |
| | | | JP | 2021528602 A | 21-10-2021 |
| | | | KR | 20210019994 A | 23-02-2021 |
| | | | PL | 3810940 T3 | 04-09-2023 |
| | | | SG | 11202010546V A | 27-11-2020 |
| | | | US | 2021231150 A1 | 29-07-2021 |
| | | | WO | 2019243084 A1 | 26-12-2019 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021231150 A1
- US 2020224695 A1
- EP 4074991 A1
- EP 4074990 A1